# EUROPEAN PATENT SPECIFICATION

(11) **EP 4 321 584 B1**
(45) Date of publication and mention of the grant of the patent: **09.04.2025**
(21) Application number: 22189939.6
(22) Date of filing: 11.08.2022
(51) Int. Cl.: C09D 11/328, C09D 11/326, C09D 11/08, C09D 11/38, C09D 11/102, C09D 11/103, C09D 11/107, C09D 11/40, D06P 5/30

(54) **AQUEOUS INK JET COMPOSITION FOR TEXTILE PRINTING**
WÄSSRIGE TINTENSTRAHLZUSAMMENSETZUNG FÜR DEN TEXTILDRUCK
COMPOSITION AQUEUSE POUR JET D'ENCRE DESTINÉE À L'IMPRESSION TEXTILE

(43) Date of publication of application: 14.02.2024
(73) Proprietor: AGFA NV, 2640 Mortsel (BE)
(72) Inventor: BERTELS, Ellen, 2640 Mortsel (BE); LINGIER, Sophie, 2640 Mortsel (BE)
(74) Representative: Lingier, Stefaan Frans L.

(56) References cited:
- EP-A1- 3 048 145
- EP-A1- 3 127 967
- EP-A1- 3 569 663
- EP-A1- 3 932 674
- US-A1- 2015 337 153
- US-A1- 2016 208 435

## Description

### Technical Field

The present invention relates to an aqueous inkjet ink comprising a disperse dye as water-insoluble colouring material, for the printing of synthetic substrates such as textile materials and sheets for transfer printing. The invention includes also a recording method, dyeing method and colouring method by means of ink-jetting using said ink composition.

### Background Art

In recent years, the use of ink jet printing has been expanding, and is applied not only to printing machines for office or home use but also to commercial printing, textile printing, or the like.

Ink jet ink containing a disperse dye have already been used in industrial dyeing of hydrophobic fibres such as polyesters. The disperse dye penetrates and diffuses into the fibres under high temperature condition, and is fixed by means of hydrogen bond, intermolecular force, etc. between the fibre and the dye.

Printing methods for such ink jet inks include a direct printing method, in which the ink is printed on a recording medium (usually composed of fibres) to be dyed and then the dye is fixed by heat treatment such as steaming or calendaring; and include also a thermal transfer printing method in which the dye ink is printed on an intermediate transfer medium (transfer paper) and then the dye is sublimated and transferred from a side on the intermediate transfer medium to a recording medium to be dyed.

An ink jet ink containing a disperse dye generally has the problem that ink storage stability is low and jetting reliability in an ink jet method is also poor, due to a problem in long-term dispersion stability of the disperse dye.

In EP 3 546 535 A, an aqueous ink jet composition comprising a disperse dye, a combination of an anionic dispersing agent such as lignin sulfonic acid with a dispersant selected from the group consisting of a styrene maleic acid, a styrene maleimide, an ethylene oxide adduct of tristyrylphenol, and a derivative of the ethylene oxide adduct of tristyrylphenol is disclosed.

JP2015091906 A discloses an aqueous ink jet composition comprising a disperse dye, a combination of an anionic dispersing agent such as lignin sulfonic acid with ethylene oxide adduct of phytosterols and an ethylene oxide adduct of cholestanols.

Both EP 3 546 535 A and JP2015091906 A claim that the combinations of dispersants improve the storage stability of the aqueous disperse dye inks. Although this improvement is maybe the case for inks containing a single disperse dye, this is not the case for inks containing multiple disperse dyes such as for black inks.

US 2015337153 A discloses an ink jet ink set for sublimation transfer, including a first ink composition containing a disperse dye and a first dispersant; and a second ink composition containing a disperse dye and a second dispersant, each of the dispersants contain a salt of aromatic sulfonic acid.

The compositions in the above mentioned patent applications lead to an improvement of the discharge stability of the aqueous ink jet ink containing lignin sulfonic acid.

WO 2014/127050 A1 discloses the combination of a PEO-PPO-based dispersant with lignosulphonate to improve the color fastness in direct inkjet printing on polyester fabrics. EP 3932674 is cited as a further prior art.

Hence, there is still a need for a disperse dye containing aqueous inkjet ink which shows a reliable jetting behaviour also for inks comprising a mix of disperse dyes and showing an improved image quality.

### Summary of invention

It is an objective of the invention to provide a solution for the above stated problems. The objective has been achieved by incorporating aromatic sulphonic acid and a dispersant, the dispersant being a copolymer of an acrylate and an alkylene oxide into the aqueous inkjet ink comprising disperse dye as defined in claim 1.

According to another aspect, the present invention includes an aqueous inkjet ink set as defined in claim 11.

According to another aspect, the present invention includes a method for inkjet dyeing characterized by fixing a colouring material to the hydrophobic fibre by means of steaming or baking treatment after providing the ink composition according to claim 1 to a hydrophobic fibre by means of an ink jetting as defined in claim 13.

Other features, elements, steps, characteristics and advantages of the present invention will become more apparent from the following detailed description of preferred embodiments of the present invention. Specific embodiments of the invention are also defined in the dependent claims.

### Description of embodiments

### A. Aqueous inkjet ink composition

The ink for inkjet textile printing of the present invention comprises water, a disperse dye, a first dispersant selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin condensate and a second dispersant, being a copolymer of an acrylate and an alkylene oxide.

### A.1. First dispersant

The first dispersant is selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin.

A preferred first dispersant is lignin sulfonate salt. Examples thereof include Vanillex N, Vanillex RN, Vanillex G, and Pearllex DP (all manufactured by Nippon Paper Industries, Ltd.), REAX 85A, REAX 907, Vanisperse CB, Diwatex XP-9, REAX WSD, and REAX 105M, among others. Vanisperse being mostly preferred due to to its positive influence on feathering and L values of sublimated prints.

Examples of the first dispersant other than the lignin sulfonate include a formalin condensate of a high molecular weight sulfonic acid (preferably aromatic sulfonic acid), a salt thereof, or a mixture thereof (hereinafter, unless otherwise specified, "formalin of sulfonic acid". When the term "condensate" is used, the term "condensate" includes at least one dispersant selected from "these salts or mixtures thereof").

Examples of "these salts" include salts such as sodium salt, potassium salt and lithium salt. Examples of the formalin condensate of aromatic sulfonic acid include creosote oil sulfonic acid; cresol sulfonic acid; phenol sulfonic acid; β-naphthalene sulfonic acid; β-naphthol sulfonic acid; β-naphthalene sulfonic acid and β-naphthol sulfonic acid. Examples thereof include formalin condensates such as cresol sulfonic acid and 2-naphthol-6-sulfonic acid. Among these, creosote oil sulfonic acid and β-naphthalene sulfonic acid formalin condensates are preferable.

As an example, the formalin condensate of creosote oil sulfonic acid is Laberin W series (manufactured by Dai-ichi Kogyo Seiyaku Co., Ltd.), Demor C (manufactured by Kao Co., Ltd.); the formalin condensate of methylnaphthalene sulfonic acid is laberin. AN series (both manufactured by Dai-ichi Kogyo Seiyaku Co., Ltd.); etc.

Examples of the formalin condensate of β-naphthalene sulfonic acid include Demor N; and examples of the formalin condensate of special aromatic sulfonic acid include Demor SN-B (both manufactured by Kao Co., Ltd.).

The amount of the first dispersant and more specifically of lignin sulfonate salt in the aqueous ink according to the invention is from 0.1 wt.% to 7 wt.%, more preferably from 1 wt.% to 5 wt.% with respect to the total weight of the ink. An amount below the lower levels of the above ranges does not bring any substantial benefit, regarding, ink stability or image quality. An amount above the higher levels of the above ranges influences the chroma too much and results in unacceptable wet crock fastness.

The first dispersant can be added during the preparation of the disperse dye dispersion. The first dispersant should preferably added during the milling or homogenization step in de preparation of the dispersion. Optionally, the first dispersant may also be added during the preparation of the ink composition, hence after the preparation of the disperse dye dispersion.

### A.2. Second dispersant

Preferably the inkjet ink according to the invention comprises a polymeric dispersant as second dispersant. Examples of useful polymer dispersants, include, a copolymer of an acrylate and an alkylene oxide, a copolymer having a polyacrylate backbone with alkylene oxide groups, the alkylene oxide groups are preferably present as side chains.

The second dispersant is preferably added during the preparation of the disperse dye dispersion, more preferably is added during the milling or homogenization step in de preparation of the dispersion.

The amount of the second dispersant and more specifically of lignin sulfonate salt in the aqueous ink according to the invention is from 0.1 wt.% to 7 wt.%, more preferably from 1 wt.% to 3 wt.% with respect to the total weight of the ink. An amount below the lower levels of the above ranges does not bring any substantial benefit, regarding disperse dye stability. An amount higher than the lower levels of the above ranges increases cost and negatively affects stability of the dispersion.

Most preferred dispersants are copolymers such as Disperbyk 2010 from Byk Chemie or Edaplan 482 from Munzing Chemie.

### A.3. Dispersion of disperse dye

The basis of the ink of the present invention is the dispersion of the disperse dye. This dispersion comprises a vehicle which is preferably water, at least one disperse dye, a second dispersant (see § A.2) and optionally a first dispersant (see § A.1.).

### A.3.1. Preparation of the disperse dye dispersion

The method for dispersing comprises t a step of making a pre-mix of the vehicle and the second dispersant. The first dispersant can be added simultaneously or consequently after the second dispersant.

Once the pre-mix is prepared, a pre-dispersion is made by mixing the disperse dye with the pre-mix. Also in this step the first dispersant can be added.

In another embodiment, the pre-dispersion can be directly made by mixing the vehicle with the disperse dye, the second dispersant and optionally the first dispersant in one step.

Subsequently, high shear forces or milling is applied onto the obtained pre-dispersion such as to obtain a stable dispersion of the disperse dyes.

The dispersion method for obtaining the stable dispersion of the disperse dyes, can be arbitrarily selected as long as this is a method for breaking agglomerates of particles and evenly dispersing the disperse dyes in the vehicle.

Equipment suitable for dispersing the disperse dyes include a pressure kneader, an open kneader, a planetary mixer, a dissolver, and a Dalton Universal Mixer. Other suitable milling and dispersion equipment include a ball mill, a pearl mill, a colloid mill, a high-speed disperser, double rollers, a bead mill, a paint conditioner, and triple rollers. The dispersion may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is preferably performed with cooling to prevent build-up of heat.

The addition of the first dispersant can take place before, during or after the process of applying the high shear forces or the milling. Preferably the first dispersant is added before the process of applying the high shear forces or the milling.

The ratio of the amount of the first dispersant with respect to the amount of disperse dye is preferably from 0.04 to 1, more preferably 0.05 to 0.8, most preferably 0.06 to 0.6. A ratio below these ranges results in insufficient effect of the presence of the first dispersant on image quality (feathering), a ratio above results in an unacceptable chroma change of the ink color and results in unacceptable wet crock fastness.

The ratio of the amount of the second dispersant with respect to the amount of disperse dye is preferably from 0.2 to 1.

Without being bound by a theory, it is thought that first dispersant works as a kind of synergist together with the second dispersant which results in stable dispersions leading to stable and high performing inks.

The concentration of the disperse dye with respect to the total weight of the dispersion of the present invention is 10 to 60 wt.%, preferably 15 to 55 wt.%, and more preferably 25 to 50 wt.%.

The particle size of the disperse dye can be controlled by the treatment time of the high shear application or of the milling. More particularly, by increasing the treatment time, the disperse dye particles can be made smaller and the amount of particle oversizers can be reduced.

Preferably the disperse dye particles of the present invention have an average particle diameter of 1µm or less, preferably 500 nm or less, more preferably 250 nm or less. If the average particle size is higher than these values, jetting reliability problems will occur due to clogging of inkjet head nozzles. At the same time the amount of particle oversizers having a particle size more than 1.125µm should be lower than to assure a reliable jetting of the ink wherein the disperse dye dispersion is included.

By means of the production method described above, a stable disperse dye dispersion is obtained which can be used in the preparation of disperse dye inkjet ink according to the invention.

### A.2.2. Disperse dye

The ink compositions of the present disclosure include at least one disperse dye.

Suitable disperse dyes include any dye identified as a disperse dye by Colour Index International in the Colour Index, www. colour-index. corn, which is incorporated herein by reference in its entirety. Examples of disperse dyes are given in the Colour Index, 3' Edition, pages 2479 to 2742, which is incorporated herein by reference in its entirety. Each of the disperse dyes described therein is also incorporated herein by reference.

Suitable disperse dyes that may be used in the inks described herein include all dyestuffs that are considered disperse.

Examples of the disperse dyestuff used in the present invention include an azo dye, an anthraquinone dye, a quinophthalone dye, a styryl dye, an oxazine dye, a xanthene dye, a methine dye, and an azomethine dye. Of such dyes, examples of a yellow disperse dyestuff include "C.I.Disperse Yellow 3, 4, 5, 7, 9,13, 23, 24, 30, 33, 34, 42, 44, 49, 50, 51, 54, 56, 58, 60, 63, 64, 65, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 201, 202, 204, 210, 211, 215, 216, 218, 224, 227, 231and 232. Examples of an orange disperse dye stuff include "C.I. Disperse Orange 1, 3, 5, 7,11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 62, 66, 71, 73, 76, 78, 80, 89, 90, 91, 93, 96, 97, 119, 127, 130, 139, 142 and 155. Examples of a red disperse dye stuff include "C.I.Disperse Red 1, 4, 5, 7, 11, 12, 13, 15, 17, 27, 43, 44, 50, 52, 53, 54, 55, 56, 58, 59, 60, 65, 67.1, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311,312, 320, 324, 328 and 343. Examples of a blue disperse dye stuff include C.I. Disperse Blue 3, 7, 9, 14, 16,19,20, 26, 27, 35, 43, 44, 54, 55, 56, 58, 60, 62, 64, 71, 72, 77, 73, 75, 79, 81, 82, 83, 87, 91, 93, 94, 95, 96, 102, 106, 108, 112, 113, 115, 118, 120,122, 125, 128, 130, 139, 141, 142, 143, 146, 148, 149, 153,154, 158, 165, 167, 171, 173, 174, 176, 181, 183, 185, 186, 187,189, 197, 198, 200, 201, 205, 207, 211, 214, 224, 225, 257, 259, 267, 268, 270, 281, 284, 285, 287, 288, 291, 293, 295, 297, 301, 315, 330, 333, 354, 359, 360, 366, 367 and 373. Most preferably, Disperse Blue 360 as disperse dyestuff for the aqueous inkjet ink of the invention, is used. Examples of other disperse dyestuff include "C.I. Disperse Violet 1, 4, 8, 23, 26, 27, 28, 31,33, 35, 36, 38, 40, 43, 46, 48, 50, 51, 52, 56, 57, 59, 61, 63, 69, 77 and 93. Examples of a black disperse dye, which are not particularly limited, include C.I. Disperse Black 1, 3, 10, and 24. Examples of a brown disperse dye, which are not particularly limited, include Disperse Brown 27. Examples of types of dyes other than the above-described dyes include "C.I. Solvent Yellow 160", C.I. Solvent Green 3" and 163, and "C.I.Vat Red 41".

Generally, these disperse dyes preferably are contained in an amount of 0.2 to 12 wt. %, and more preferably 0.5 to 10 wt. %, with respect to the total mass of the ink, because the dispersion stability can be maintained and the required print density can be achieved.

### A.3. Water-miscible solvent

The aqueous inkjet ink according to the invention may contain a water-miscible organic solvent. In the present invention this can include glycerin, diglycerin, polyglycerin, ethylene glycol, diethylene glycol, triethylene glycol, polyethylene glycol, propylene glycol, 1,3-propanediol, dipropylene glycol, tripropylene glycol, polypropylene glycol, 2-pyrrolidone, N-methylpyrrolidone, dimethyl sulfoxide, and sulfolane.

From the water-miscible organic solvents, it is preferable to use glycerin, diethylene glycol, triethylene glycol, polyethylene glycol (average molecular weight of 200 to 600), dipropylene glycol, and tripropylene glycol, and more preferably glycerin, diethylene glycol, and dipropylene glycol, from the viewpoint of moisturizing properties. Of these solvents, glycerin is particularly preferable.

Other examples include propylene glycol, dipropylene glycol, 1,3-propanediol, 1,2-butanediol, 1,3-butanediol, 1,4-butanediol, 2,3-butanediol, 3-methyl-1, 3-butanediol, 1,2-pentanediol, 1,5-pentanediol, 2-methyl-2, 4-pentanediol, 3-methyl-1, 5-pentanediol, 1,2-hexanediol and 1,6-hexanediol.

Examples of the glycol ether include monoalkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol monopropyl ether can be preferably exemplified. These solvents may be used alone or in combination of two or more.

These water-miscible organic solvents preferably are contained in an amount of 1 to 50 wt.%, more preferably 30 to 45 wt.%, and particularly preferably 30 to 40 wt.%, with respect to the total mass of the ink, from the viewpoint of the viscosity adjustment of the ink and the prevention of clogging of nozzles of the inkjet print head by the moisturizing effect.

### A.4. Surfactant

To adjust the surface tension of the ink, a surfactant can be used, and examples thereof include anionic surfactants, amphoteric surfactants, cationic surfactants, and non-ionic surfactants.

Examples of the anionic surfactant include alkyl sulfocarboxylate, α-olefin sulfonate, polyoxyethylene alkyl ether acetate, N-acylamino acid and salt thereof, N-acylmethyl taurine salt, alkyl sulfate polyoxy alkyl ether sulfate, alkyl sulfate polyoxyethylene alkyl ether phosphate, rosin acid soap, sulfate esters of castor oil, lauryl alcohol sulfate ester, alkyl phenol type phosphate ester, alkyl-type phosphate ester, alkyl aryl sulfonate, diethyl sulfosuccinate, diethyl hexyl sulfosuccinate, and dioctyl sulfosuccinate.

Examples of the amphoteric surfactant include lauryl dimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, and other imidazoline derivatives thereof.

Examples of the cationic surfactant include 2-vinylpyridine derivatives and poly 4-vinylpyridine derivatives. Further examples of cationic surfactants are quaternary ammonium salts of long chain aliphatic tertiary amines such as cetyl trimethyl ammonium bromide, cetyl dimethyl benzyl ammonium chloride and hydroxyethyl dimethyl dodecyl ammonium chloride and quaternary salts of nitrogen containing heteroaromatic rings such as hexadecyl pyridinium bromide and quaternized imidazoles and benzimidazoles. Other examples are protonated long chain aliphatic amines such as the hydrochloric acid salt of dimethyl hexadaceyl amine and the toluene sulfonic acid salt of diethyl dodecyl amine.

Examples of the nonionic surfactant include ether based surfactants such as polyoxyethylene nonylphenyl ether, polyoxyethylene octyl phenyl ether, polyoxyethylene dodecyl phenyl ether, polyoxyethylene oleyl ether, polyoxyethylene lauryl ether, and polyoxyethylene alkyl ether; ester-based surfactants such as polyoxyethylene oleic acid ester, polyoxyethylene distearate, sorbitan laurate, sorbitan monostearate, sorbitan monooleate, sorbitan sesquioleate, polyoxyethylene monooleate, and polyoxyethylene stearate; and acetylene glycol (alcohol)-based surfactants such as 2,4,7,9-tetramethyl-5-decyne-4,7-diol, 3,6-dimethyl-4-octyne-3,6-diol, and 3,5-dimethyl-1-hexyne-3-ol.

### B. Inkjet ink set

It is further a preferred embodiment of the invention, that an aqueous inkjet ink set is made wherein at least one of its inks is an aqueous ink containing a dispersed dye, a first dispersant selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin condensate and a second dispersant, being a copolymer of an acrylate and an alkylene oxide.

More preferably, the cyan ink or magenta ink of a CMY or CMYK inkjet ink set and the black ink of a CMYK inkjet ink set, is an aqueous ink containing a dispersed dye, a first dispersant and a second dispersant as described above.

### C. Inkjet recording method

A method of inkjet recording, more particularly of inkjet textile printing using the ink of the present invention as described above can be performed as follows. First, the ink for inkjet textile printing is set in a piezo-type, thermal-type or continuous inkjet printer and then can be ejected on a fabric comprising hydrophobic fibres such as polyester fibres. Onto the hydrophobic fibres, a pre-treatment may have been applied to prevent blur.

After the jetting step, the fabric is optionally heated to dry the image, followed by heating the printed fabric at a temperature from 150°C to 220° C for 0.5 to 15 minutes under pressure. Preferably, the heating time is 40 to 60 seconds. Several means of heating can be used, but preferably calandering and steam heating is used. The hydrophobic fibres, such as polyester fibres are dyed with the disperse dyestuff of the ink. Thereafter the non-fixed disperse dyes, the additives such as a dispersant, the pre-treatment agent, the first and second dispersant may be removed by washing or reduction cleaning or reduction clearing and washing with water. After drying the fabric, a dyed product on which an image is printed is provided. In the case of direct printing, the dyed product further contains the first and second dispersant present in the ink.

The inkjet recording method according to the invention may also comprise a transferring step to a fabric or an object coated with synthetic polymers suitable to accepts disperse dyes, using an intermediate transfer medium. As the intermediate transfer medium, which is not particularly limited, for example, paper such as plain paper or a recording medium provided with an ink absorbing layer based on porosity or swellability (which is referred to as paper for exclusive use for ink jet or coated paper) can be used. Among these, paper provided with an ink absorbing layer which is formed of inorganic fine particles such as silica is preferable. In the process of drying the ink jet ink composition for sublimation transfer attached to the intermediate transfer medium, it is possible to obtain the intermediate transfer medium in which bleeding is suppressed, and in the following transferring step, there is a tendency that the sublimation of the disperse dye proceeds more smoothly.

The transferring step is a step of transferring the disperse dye included in the ink jet ink composition to a fabric or an object coated with synthetic polymers suitable to accepts disperse dyes, by heating in a state in which a surface of the intermediate transfer medium on which the ink jet ink according to the invention has been jetted and a surface of the fabric or an object coated with e.g. PES face each other.

The heating temperature in the transferring step, which is not particularly limited, is preferably 160°C to 220°C, and more preferably 170°C to 200° C. When the heating temperature is in the above-described range, the sublimation of the dyes is sufficient to achieve a high colour density while shrinking and deformation of the fabric is avoided.

The heating time in the step, which also depends on the heating temperature, is 30 seconds to 150 seconds, and more preferably 45 seconds to 90 seconds. When the heating time is in the above-described range, there is a tendency that the energy required for transferring can be smaller and the productivity of the recorded matter is improved.

### D. EXAMPLES

### D.1. Materials

All materials used in the following examples were readily available from standard sources such as Merck and ACROS (Belgium) unless otherwise specified. The water used was deionized water.
- **DB 360:** Disperse blue 360 is a disperse dye bought under the tradename Riaplas Blue DB TP, supplied by Rialco
- **DO 25:** Disperse orange 25 is a disperse dye with tradename Riaplas orange 2 RL TP, supplied by Rialco
- **DY 54:** Disperse yellow 54 is a disperse dye bought under the tradename Riaplas Yellow 3 GL TP, supplied by Rialco
- **DR 60:** Disperse red 60 is a disperse dye with tradename Riaplas Red 2 BL TP, supplied by Rialco
- **DB359:** Disperse blue 359 is a disperse dye bought under the tradename riaplas blue 3GL-TPM, supplied by Rialco
- **Disperbyk 2010** is a 40% emulsion of styrene butylacrylic co-polymer with polyethyleneglycol moieties, from BYK Chemie
- **Edaplan ^{™} 482** is a polymeric dispersant from MUNZING
- **Dispex^{™} Ultra PX 4585** is a high-molecular-weight dispersing agent available as (50% aqueous solution) from BASF
- **Bykjet 9170** is a 40% solution of a co-polymer with pigment affinic groups from BYK Chemie
- **Proxelk - D3798** is a 5% solution of CASnr127553-58-6 manufactured by PROM CHEM UK
- **VANI** is Vanisperse CB, a lignosulfonate supplied by Borregaard
- **Reax LS** is a lignosulphonate from Ingevity
- **Rhodoline 3400** is a non-ionic wetting and dispersing agent manufactured by Solvay
- **Disperbyk 190** is a 40% solution of a high molecular weight block copolymer with pigment affinic groups with CASnr216303-28-5 manufactured by BYK chemie
- **GLY** is glycerin
- **PD** is 1,3 propanediol, supplied by IMCD
- **SURF** is Surfynol 104H produced by Evonik
- **DI water** is deionised water

### D.2. Measuring methods

### D.2.1. Average Particle Size of the disperse dye dispersion

The average particle size of the disperse dye particles in the dispersion was measured using a Zetasizer^{™} Nano-S (Malvern Instruments, Goffin Meyvis) based upon the principle of dynamic light scattering. For reliable ink jetting characteristics (jetting quality and print quality), the average particle size of the dispersed particles is preferably below 250 nm.

### D.2.2. Viscosity of the dispersion

The viscosity of the disperse dye dispersion was evaluated with an Anton Paar MCR302 Rheometer in a cone plate set-up. The viscosity is measured at a shear rate of 10 s⁻¹ at a temperature of 25°C.

### D.2.3. Coating of comparative and inventive inks

A 4 µm bar coating of an ink was made using an Elcometer 4340 using a spiral bar of 4 µm on a polyester backlit substrate and sublimated using a calender (with belt and heated oil rotating drum) at 190°C with a contact time of 54 seconds.

### D.2.4. L value of the ink

The ink was diluted 10 times with deionised water and coated according to § D.2.3. The colour of the ink coating was measured using a Gretag SPM50 with D65 illumination under an observer angle of 10°. Evaluation was done according to **Table 1.**

**Table 1**

| **L value** | **Score** |
|---|---|
| < 26 | A |
| 26-28 | B |
| > 28 | C |

### D.2.5. Feathering

The ink was coated undiluted according to D.2.3. on the rough side of Be.tex display 210 FR supplied by Berger, Germany. Feathering was evaluated according to Table 2.

**Table 2**

| **Observation** | **Score** |
|---|---|
| No/slight feathering | A |
| Intermediate feathering | B |
| Severe feathering | C |

### D.2.6. Storage stability of inks

To evaluate the storage stability of inks, the average particle size of the ink was firstly measured with dynamic light scattering by photon correlation spectroscopy at a wavelength of 633 nm with a 4 mW HeNe laser on a diluted sample of the ink.

This was done using a Nicomp 380, available from Particle Size Solutions. Samples were measured fresh as well as after ageing 2 weeks in an oven at 60°C. The relative change in average particle size (PS) was calculated as follows: [(PS(2 weeks 60°C)- PS(fresh))/ PS(fresh)] and scored according to Table 3.

**Table 3**

| **Relative change of PS (%)** | **Score** |
|---|---|
| PS<10 | A |
| 10≤PS<20 | B |
| 20≤PS<30 | C |
| 30≤PS<40 | D |

### D.3. Preparation of disperse dye dispersions

In all below dispersion preparations, quantities of compounds, solutions, emulsions are given in wt.% with respect to the total weight of the dispersion.

### Preparation of the blue disperse dye dispersion (BDDD-1)

48.73 wt.% of DI water, 25 wt.% of Bykjet 9170 and 0.4 wt.% of the biocide (Proxelk - D3798) were premixed in a vessel using a mechanical stirrer. First, 25 wt.% of DB359 was sprinkled in the solution, after which the pH was increased by adding 0.873 % of triethanolamine. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 30 min residence time, the mill was emptied by pumping the obtained dispersion in a vessel.

The blue disperse dye dispersion contained particles with an average particle size of 142 nm and a viscosity of 76 mPa.s.

### Preparation of blue disperse dye dispersions with lignosulphonate (BDDD-2).

42.73 wt.% of DI water, 25 wt.% of Bykjet 9170, 0.4 wt.% of the biocide (Proxelk - D3798) and 6% of VANI were premixed in a vessel using a mechanical stirrer until all the VANI is in solution. Next, 25 wt.% of DB359 was sprinkled in the solution, after which the pH was increased by adding 0.873% of triethanolamine. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 30 min residence time, the mill was emptied by pumping the obtained dispersion in a vessel.

The blue disperse dye dispersion with VANI contains particles with an average particle size of 189 nm and a viscosity of 419 mPa.s.

### Preparation of the black disperse dye dispersion (BDDD-3)

37.6 wt.% of DI water, 30 wt.% of Disperbyk 2010 and 0.4 wt.% of the biocide (Proxelk - D3798) were premixed in a vessel using a mechanical stirrer. One by one, the following products were sprinkled in the premix using the following order of addition. First, 12.64 wt.% of DB 360 was added, followed by, 12.64 wt.% DO 25, 3.23 wt.% of DY54 and 3.49 wt.% of DR 60. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 25 min residence time, the mill was emptied by pumping the obtained dispersion in a vessel.

The black disperse dye dispersion contains particles with an average particle size of 133 nm and a viscosity of 254 mPa.s.

### Preparation of black disperse dye dispersions with lignosulphonate (BDDD-4 to BDDD-7)

5% wt.% of VANI as a first dispersant, a second dispersant being 30 wt.% of Disperbyk 2010 OR 30 wt.% of Disperbyk 190 OR 12 wt.% of Rhodoline 3400 OR 12 wt.% of Edaplan 482, DI water (32.6 wt.% when Disperbyk 2010 or Disperbyk 190 are used, OR 50.6 wt.% when Rhodoline 3400 or Edaplan 482 are used) and 0.4 wt.% of the biocide (Proxelk - D3798) were premixed in a vessel using a mechanical stirrer until all components were dissolved. One by one, the following products were sprinkled in the premix using the following order of addition. First, 9.875 wt.% of DB 360 was added, followed by, 9.875 wt.% of DO 25, 2.52 wt.% of DY54 and 2.73 wt.% of DR 60. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 25 min residence time, the mill was emptied by pumping the obtained dispersion in a vessel.

The particle size and viscosity of the obtained dispersions are listed in Table 4.

**Table 4 .**

| Dispersion | 2^{nd} dispersant | Average particle size (nm) | Viscosity (mPa.s) |
|---|---|---|---|
| BDDD-4 | Disperbyk 2010 | 119 | 101 |
| BDDD-5 | Edaplan 482 | 114 | 20 |
| BDDD-6 | Disperbyk 190 | 203 | High viscosity |
| BDDD-7 | Rhodoline 3400 | 194 | High viscosity |

From Table 4, it follows that second dispersants based on polyacrylates or ethoxylated tristyrylphenyl show a much higher average particle size and viscosity than the second dispersants based on a copolymer of acrylate and alkylene oxide. Even if it is possible to incorporate these dispersions in an ink composition, this will definitely lead to jetting reliability issues and storage stability problems due to the increased average particle size.

### Preparation of the black disperse dye dispersion with Edaplan 482 as second dispersant (BDDD-8)

A solution of 50 wt.% of Edaplan 482 in DI water was prepared the day before by heavily mixing overnight. 50.6 wt.% of DI water, 24 wt.% of the Edaplan 482 solution and 0.4 wt.% of the biocide (Proxelk - D3798) were premixed in a vessel using a mechanical stirrer. One by one, the following products were sprinkled in the premix using the following order of addition. First, 9.875 wt.% of DB 360 was added, followed by, 9.875 wt.% DO 25, 2.52 wt.% of DY54 and 2.73 wt.% of DR 60. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 25 min residence time, the mill was emptied by pumping the obtained dispersion in a vessel.

### D.4. Ink formulations

Cyan Inventive and comparative inks were formulated according to Table **5**, using dispersions prepared in D.3. The amounts in Table 5 are wt.% with respect to the total mass of the ink.

INKCOMP-1 is a cyan ink without lignosulfonate. INKINV-1 is identical to INKCOMP-1 but contains a lignosulfonate (VANI) that is added freely to the ink composition. In this case the lignosulfonate is first dissolved into water (25% solution), after which it can be added to the ink formulation. INKINV-2 has an identical composition as INKINV-1, but the lignin sulfonate (VANI) has been added via the dispersion during the milling.

**Table 5**

| Compound | INKCOMP-1 | INKINV-1 | INKINV-2 |
|---|---|---|---|
| GLY | 16.0 | 16.0 | 16.0 |
| PD | 20.0 | 20.0 | 20.0 |
| SURF | 0.67 | 0.67 | 0.67 |
| VANI | 0 | 1.5 | 0 |
| BDDD-1 | 24.0 | 24.0 | 0 |
| BDDD-2 | 0 | 0 | 24.0 |
| DI water | Balance to 100% | Balance to 100% | Balance to 100% |

Black Inventive and comparative inks were formulated according to Table 6 using dispersions prepared in D.3. When the lignosulfonate is added freely, the lignosulfonate is firstly dissolved into water (25% solution), after which it can be added to the formulation.

INKCOMP-2 as well as INKINV-3 to INKINV-5 contain a surfactant, other black inks in Table 6 do not contain a surfactant. INKCOMP-2, -3 and -4 do not contain a lignosulfonate. INKINV-3, -4 and -6 contain a lignosulfonate that is freely added. INKINV-5, -7 and -8 do contain a lignosulfonate that is added via the dispersion during the milling step. When added via the milling step, the lignosulfonate content in the ink is lower compared to the content of freely added lignosulfonate. INKCOMP-4 and INKINV-8 do use Edaplan 482 as a second dispersant, while other inks do use Disperbyk 2010 as the second dispersant.

**Table 6**

| | INKCOMP-2 | INKINV-3 | INKINV-4 | INKINV-5 | INKCOMP-3 | INKINV-6 | INKINV-7 | INKCOMP-4 | INKINV-8 |
|---|---|---|---|---|---|---|---|---|---|
| GLY | 20 | 17.5 | 17.5 | 20 | 18.75 | 17.5 | 18.75 | 18.75 | 18.75 |
| PD | 22 | 19.5 | 19.5 | 22 | 20.75 | 19.5 | 20.75 | 20.75 | 20.75 |
| SURF | 0.67 | 0.67 | 0.67 | 0.67 | 0 | 0 | 0 | 0 | 0 |
| VANI (solids content) | 0 | 3.0 | 0 | 0 | 0 | 3.0 | 0 | 0 | 0 |
| Reax LS (solids content) | 0 | 0 | 3.0 | 0 | 0 | 0 | 0 | 0 | 0 |
| BDDD-3 | 18.75 | 18.75 | 18.75 | 0 | 18.75 | 18.75 | 0 | 0 | 0 |
| BDDD-4 | 0 | 0 | 0 | 24.0 | 0 | 0 | 24.0 | 0 | 0 |
| BDDD-5 | 0 | 0 | 0 | 0 | 0 | 0 | 0 | 0 | 24.0 |
| BDDD-8 | 0 | 0 | 0 | 0 | 0 | 0 | 0 | 24.0 | 0 |
| DI water | Balance to 100% | Balance to 100% | Balance to 100% | Balance to 100% | Balance to 100% | Balance to 100% | Balance to 100% | Balance to 100% | Balance to 100% |

### D.5. Evaluation

The Cyan and Black inks, prepared in § D.4. were evaluated as described in § D.2.

From Table 7 it follows that both cyan inks with the lignosulfonate added via the dispersion or added freely to the ink composition, do show a lower L value of the ink coatings and do show an improvement in ink stability by decreasing particle size growth. Moreover, they also show less feathering than the comparative ink.

**Table 7**

| | INKCOMP-1 | INKINV-1 | INKINV-2 |
|---|---|---|---|
| Storage stability | B | A | A |
| L value | 54.7 | 52.8 | 53.1 |
| Feathering | C | B | B |

From Table 8 it follows that the black inks with the lignosulfonate added via the dispersion or added freely to the ink composition, show a lower L value of the coatings and do show an improved feathering. For those inks, the influence of the lignosulfonate on particle size is limited. In this case the presence of a surfactant does have a larger influence on storage stability/particle size growth.

**Table 8.**

| | L value | Feathering |
|---|---|---|
| INKCOMP-2 | C | C |
| INKINV-3 | A | B |
| INKINV-4 | B | B |
| INKINV-5 | B | B |
| INKCOMP-3 | C | C |
| INKINV-6 | A | A |
| INKINV-7 | B | A |
| INKCOMP-4 | C | B |
| INKINV-8 | B | A |

## Claims

1. Aqueous ink for textile printing comprising a disperse dye, a first dispersant selected from the group consisting of an alkali salt of aromatic sulfonic acid, an alkali salt of aromatic sulfonic acid-formalin condensate, an alkali salt of β-naphthalenesulfonic acid, and an alkali salt of β - naphthalenesulfonic acid-formalin condensate and a second dispersant, the second dispersant is a copolymer of an acrylate and an alkylene oxide.

2. The aqueous ink according to claim 1 wherein the alkylene oxide is ethylene or propylene glycol.

3. The aqueous ink according to any of the previous claims wherein the aromatic sulfonic acid is lignin sulfonate.

4. The aqueous ink according to any of the previous claims wherein the ink is a black ink and the disperse dye is a mixture of a blue disperse dye and at least one other disperse dye.

5. The aqueous ink according to claim 4 wherein the disperse dye is a mixture of DO 25 or DBr 27, DY54 and DB360.

6. The aqueous ink according to any of the previous claims wherein the amount of the first dispersant is from 1 to 5 wt.% with respect to the total weight of the ink.

7. The aqueous ink according to any of the previous claims wherein the disperse dye is dispersed via a milling or high pressure homogenization step.

8. The aqueous ink according to any of the previous claims wherein the second dispersant and the aromatic sulfonic acid are present during the milling or high pressure homogenization step in the preparation of the disperse dye dispersion.

9. The aqueous ink according to any of the previous claims further containing a water-soluble organic solvent.

10. The aqueous ink according to any of the previous claims further containing an acetylene glycol (alcohol)-based surfactant.

11. An aqueous inkjet ink set wherein at least one aqueous inkjet ink comprises a disperse dye, a first dispersant selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin condensate and a second dispersant, the second dispersant is a copolymer of an acrylate and an alkylene oxide.

12. The aqueous inkjet ink set according to Claim 11 wherein the at least one aqueous inkjet ink is a black ink, cyan ink or magenta ink.

13. An inkjet recording method comprising the following steps:
a) jetting of an aqueous inkjet ink according to Claim 1 to Claim 10 onto a fabric comprising hydrophobic fibres so as to obtain an image comprising disperse dyes; and
b) applying heat to the fabric so as to fix the disperse dye to the hydrophobic fibres.

14. An inkjet recording method comprising the following steps:
a) jetting of an aqueous inkjet ink according to Claim 1 to Claim 10 onto a transfer medium so as to obtain an image comprising a disperse dye; and
b) bringing the transfer medium into contact with a fabric comprising hydrophobic fibres; and
c) applying heat to the transfer medium and/or the fabric so as to fix the disperse dyestuff onto the hydrophobic fibres of the fabric.

15. A method of preparing an aqueous inkjet ink according to any of the claims 1 to Claim 10, comprising the following steps:
a) Preparation of a disperse dye dispersion by applying high shear forces or milling onto a mixture comprising water, a first dispersant selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin condensate, a second dispersant, the second dispersant is a copolymer of an acrylate and an alkylene oxide and a disperse dye; and
b) Adding water, a water-soluble organic solvent and a surfactant to the disperse dye dispersion of step a).

## Patentansprüche

1. Wässrige Tinte für Textildruck, enthaltend einen dispersen Farbstoff, ein erstes Dispergiermittel, ausgewählt aus der Gruppe bestehend aus einem Alkalisalz einer aromatischen Sulfonsäure, einem Alkalisalz eines Kondensats von einer aromatischen Sulfonsäure und Formalin, einem Alkalisalz von β-Naphthalinsulfonsäure und einem Alkalisalz eines β-Naphthalinsulfonsäure-Formalin-Kondensats, und ein zweites Dispergiermittel, wobei das zweite Dispergiermittel ein Copolymer eines Acrylats und eines Alkylenoxids ist.

2. Die wässrige Tinte nach Anspruch 1, wobei das Alkylenoxid Ethylenglycol oder Propylenglycol ist.

3. Die wässrige Tinte nach einem der vorstehenden Anspruche, wobei die aromatische Sulfonsäure ein Ligninsulfonat ist.

4. Die wässrige Tinte nach einem der vorstehenden Anspruche, wobei die Tinte eine schwarze Tinte ist und der disperse Farbstoff ein Gemisch aus einem blauen dispersen Farbstoff und mindestens einem weiteren dispersen Farbstoff ist.

5. Die wässrige Tinte nach Anspruch 4, wobei der disperse Farbstoff ein Gemisch aus DO 25 oder DBr 27, DY54 und DB360 ist.

6. Die wässrige Tinte nach einem der vorstehenden Anspruche, wobei die Menge des ersten Dispergiermittels zwischen 1 Gew.-% und 5 Gew.-%, bezogen auf das Gesamtgewicht der Tinte, liegt.

7. Die wässrige Tinte nach einem der vorstehenden Anspruche, wobei der disperse Farbstoff mittels eines Zermahlschritts oder eines Hochdruckhomogenisierschritts dispergiert wird.

8. Die wässrige Tinte nach einem der vorstehenden Anspruche, wobei das zweite Dispergiermittel und die aromatische Sulfonsäure während des Zermahlschritts oder Hochdruckhomogenisierschritts bei der Herstellung der Dispersion des dispersen Farbstoffes enthalten sind.

9. Die wässrige Tinte nach einem der vorstehenden Anspruche, die ferner ein wasserlösliches organisches Lösungsmittel enthält.

10. Die wässrige Tinte nach einem der vorstehenden Anspruche, die ferner ein Tensid auf Basis von Acetylenglycol(alkohol) enthält.

11. Ein Satz wässriger Tintenstrahltinten, wobei mindestens eine wässrige Tintenstrahltinte einen dispersen Farbstoff, ein erstes Dispergiermittel, ausgewählt aus der Gruppe bestehend aus einem Alkalisalz einer aromatischen Sulfonsäure, einem Alkalisalz eines Kondensats von einer aromatischen Sulfonsäure und Formalin, einem Alkalisalz von β-Naphthalinsulfonsäure und einem Alkalisalz eines β-Naphthalinsulfonsäure-Formalin-Kondensats, und ein zweites Dispergiermittel enthält, wobei das zweite Dispergiermittel ein Copolymer eines Acrylats und eines Alkylenoxids ist.

12. Der Satz wässriger Tintenstrahltinten nach Anspruch 11, wobei die mindestens eine wässrige Tintenstrahltinte eine schwarze Tinte, eine Cyantinte oder eine Magentatinte ist.

13. Ein Tintenstrahlaufzeichnungsverfahren, das die folgenden Schritte umfasst:
a) Aufsprühen einer wässrigen Tintenstrahltinte nach Anspruch 1 bis Anspruch 10 auf ein hydrophobe Fasern enthaltendes Gewebe, um ein disperse Farbstoffe enthaltendes Bild zu erhalten, und
b) Erwärmen des Gewebes, um den dispersen Farbstoff an den hydrophoben Fasern zu fixieren.

14. Ein Tintenstrahlaufzeichnungsverfahren, das die folgenden Schritte umfasst:
a) Aufsprühen einer wässrigen Tintenstrahltinte nach Anspruch 1 bis Anspruch 10 auf ein Transfermedium, um ein einen dispersen Farbstoff enthaltendes Bild zu erhalten, und
b) Inkontaktbringen des Transfermediums mit einem hydrophobe Fasern enthaltenden Gewebe, und
c) Erwärmen des Transfermediums und/oder des Gewebes, um den dispersen Farbstoff an den hydrophoben Fasern des Gewebes zu fixieren.

15. Ein Verfahren zur Herstellung einer wässrigen Tintenstrahltinte nach einem der Ansprüche 1 bis 10, das die folgenden Schritte umfasst:
a) Herstellung einer Dispersion eines dispersen Farbstoffes durch Anwendung hoher Scherkräfte auf oder durch Zermahlen eines Gemisches, enthaltend Wasser, ein erstes Dispergiermittel, ausgewählt aus der Gruppe bestehend aus einem Alkalisalz einer aromatischen Sulfonsäure, einem Alkalisalz eines Kondensats von einer aromatischen Sulfonsäure und Formalin, einem Alkalisalz von β-Naphthalinsulfonsäure und einem Alkalisalz eines β-Naphthalinsulfonsäure-Formalin-Kondensats, ein zweites Dispergiermittel, wobei das zweite Dispergiermittel ein Copolymer eines Acrylats und eines Alkylenoxids ist, und einen dispersen Farbstoff, und
b) Zugabe von Wasser, eines wasserlöslichen organischen Lösungsmittels und eines Tensids in die im Schritt a) erhaltene Dispersion des dispersen Farbstoffes.

## Revendications

1. Encre aqueuse pour l'impression textile contenant un colorant disperse, un premier dispersant sélectionné parmi le groupe composé d'un sel alcalin d'acide sulfonique aromatique, d'un sel alcalin d'un condensat d'un d'acide sulfonique aromatique et de formaline, d'un sel alcalin d'acide β-naphtalènesulfonique et d'un sel alcalin d'un condensat d'un acide β-naphtalènesulfonique et de formaline, et un deuxième dispersant, ledit deuxième dispersant étant un copolymère d'un acrylate et d'un oxyde d'alkylène.

2. Encre aqueuse selon la revendication 1, **caractérisée en ce que** l'oxyde d'alkylène est l'éthylène glycol ou le propylène glycol.

3. Encre aqueuse selon l'une quelconque des revendications précédentes, **caractérisé en ce que** l'acide sulfonique aromatique est un sulfonate de lignine.

4. Encre aqueuse selon l'une quelconque des revendications précédentes, **caractérisée en ce que** l'encre est une encre noire et que le colorant disperse est un mélange d'un colorant disperse bleu et d'au moins un autre colorant disperse.

5. Encre aqueuse selon la revendication 4, **caractérisée en ce que** le colorant disperse est un mélange de DO 25 ou DBr 27, DY54 et DB360.

6. Encre aqueuse selon l'une quelconque des revendications précédentes, **caractérisé en ce que** la quantité du premier dispersant est comprise entre 1% en poids et 5% en poids par rapport au poids total de l'encre.

7. Encre aqueuse selon l'une quelconque des revendications précédentes, **caractérisée en ce que** le colorant disperse est dispersé lors d'une étape de broyage ou lors d'une étape d'homogénéisation à haute pression.

8. Encre aqueuse selon l'une quelconque des revendications précédentes, **caractérisée en ce que** le deuxième dispersant et l'acide sulfonique aromatique sont présents lors de l'étape de broyage ou lors de l'étape d'homogénéisation à haute pression lors de la préparation de la dispersion du colorant disperse.

9. Encre aqueuse selon l'une quelconque des revendications précédentes comprenant en outre un solvant organique soluble dans l'eau.

10. Encre aqueuse selon l'une quelconque des revendications précédentes comprenant en outre un agent tensioactif à base d'acétylène glycol(alcool).

11. Ensemble d'encres aqueuses pour jet d'encre, **caractérisé en ce qu'**au moins une encre aqueuse pour jet d'encre contient un colorant disperse, un premier dispersant sélectionné parmi le groupe composé d'un sel alcalin d'acide sulfonique aromatique, d'un sel alcalin d'un condensat d'un d'acide sulfonique aromatique et de formaline, d'un sel alcalin d'acide β-naphtalènesulfonique et d'un sel alcalin d'un condensat d'un acide β-naphtalènesulfonique et de formaline, et un deuxième dispersant, ledit deuxième dispersant étant un copolymère d'un acrylate et d'un oxyde d'alkylène.

12. Ensemble d'encres aqueuses pour jet d'encre selon la revendication 11, **caractérisé en ce que** ladite au moins une encre aqueuse pour jet d'encre est une encre noire, une encre cyan ou une encre magenta.

13. Procédé d'enregistrement par jet d'encre comprenant les étapes consistant à:
a) projeter une encre aqueuse pour jet d'encre selon la revendication 1 à la revendication 10 sur un tissu comprenant des fibres hydrophobes afin d'obtenir une image contenant des colorants disperses, et
b) chauffer le tissu afin de fixer le colorant disperse aux fibres hydrophobes.

14. Procédé d'enregistrement par jet d'encre comprenant les étapes consistant à:
a) projeter une encre aqueuse pour jet d'encre selon la revendication 1 à la revendication 10 sur un support de transfert afin d'obtenir une image contenant un colorant disperse, et
b) mettre en contact le support de transfert avec un tissu contenant des fibres hydrophobes, et
c) chauffer le support de transfert et/ou le tissu afin de fixer le colorant disperse aux fibres hydrophobes du tissu.

15. Procédé de préparation d'une encre aqueuse pour jet d'encre selon l'une quelconque des revendications 1 à 10 comprenant les étapes consistant à:
a) préparer une dispersion d'un colorant disperse en soumettant à des forces de cisaillement élevées ou en broyant un mélange contenant de l'eau, un premier dispersant sélectionné parmi le groupe composé d'un sel alcalin d'acide sulfonique aromatique, d'un sel alcalin d'un condensat d'un d'acide sulfonique aromatique et de formaline, d'un sel alcalin d'acide β-naphtalènesulfonique et d'un sel alcalin d'un condensat d'un acide β-naphtalènesulfonique et de formaline, un deuxième dispersant, ledit deuxième dispersant étant un copolymère d'un acrylate et d'un oxyde d'alkylène, et un colorant disperse, et
b) ajouter de l'eau, un solvant organique soluble dans l'eau et un agent tensioactif à la dispersion d'un colorant disperse telle qu'obtenue dans l'étape a).
